Europäisches Patentamt

European Patent Office

Office européen des brevets

(11) Veröffentlichungsnummer: **0 255 015**

**A1**

# EUROPÄISCHE PATENTANMELDUNG

(21) Anmeldenummer: 87110493.1

(51) Int. Cl.⁴: **G21C 19/30**

(22) Anmeldetag: **20.07.87**

(30) Priorität: **31.07.86 DE 3625874**

(43) Veröffentlichungstag der Anmeldung:
**03.02.88 Patentblatt 88/05**

(84) Benannte Vertragsstaaten:
**CH DE ES GB IT LI SE**

(71) Anmelder: **Siemens Aktiengesellschaft Berlin und München**
**Wittelsbacherplatz 2**
**D-8000 München 2(DE)**

(72) Erfinder: **Henzel, Norbert, Dr.Dipl.-Chem.**
**Rathsberger Strasse 34**
**D-8520 Erlangen(DE)**
Erfinder: **Purwin, Lothar, Dipl.-Ing.**
**Scheidswaldstrasse 58**
**D-6000 Frankfurt(DE)**

(54) **Einrichtung zur Reinigung einer Flüssigkeit.**

(57) Die Erfindung betrifft eine Einrichtung zur mechanischen und ionalen Reinigung einer durch eine Zuleitung (1) zugeführten und durch eine Ableitung (2) abgeführten Flüssigkeit. Die Einrichtung dient beispielsweise zur Reinigung von im Primärkreislauf eines Kernkraftwerkes umlaufendem Wasser. Zwischen absperrbaren Zweigzuleitungen (11 und 12) und Zweigableitungen (21 und 22) sind parallelgeschaltete Filter (3 und 4), beispielsweise Pulverharz-Anschwemmfilter angeordnet. Es ist vorgesehen, daß zwischen der Zweigableitung (21,22) eines Filters (3,4) und der Zweigzuleitung (12,11) eines anderen Filters (4,3) eine absperrbare Verbindungsleitung (5,6) angeordnet ist. Dadurch sind die Filter (3 und 4) wahlweise in Parallelschaltung oder in Serienschaltung zu betreiben. Falls zwei geeignete Verbindungsleitungen (5 und 6) vorhanden sind, ist die Reihenfolge, in der die in Serie geschalteten Filter (3 und 4) durchströmt werden, umkehrbar.

EP 0 255 015 A1

## Einrichtung zur Reinigung einer Flüssigkeit

Die Erfindung betrifft eine Einrichtung zur mechanischen und ionalen Reinigung einer durch eine Zuleitung zugeführten und durch eine Ableitung abgeführten Flüssigkeit, insbesondere von im Primärkreislauf eines Kernkraftwerkes umlaufenden Wasser, durch zwischen absperrbaren Zweigzuleitungen und Zweigableitungen parallelgeschaltete Filter, die insbesondere Pulverharz-Anschwemmfilter sind.

In einer derartigen Einrichtung wird durch ionale Reinigung die Leitfähigkeit des Primärwassers derart reduziert, daß die im Reaktor bewirkte Steigerung der Leitfähigkeit rückgängig gemacht wird.

Bekannte Einrichtungen zur ionalen und mechanischen Reinigung des im Primärkreislauf eines Kernkraftwerkes umlaufenden Wassers weisen zwei parallelgeschaltete Pulverharz-Anschwemmfilter auf. Dabei ist es notwendig, daß jedes der beiden Filter für die notwendige Reduzierung der Leitfähigkeit im Wasser ausgelegt ist. Durch die Parallelschaltung kann jeweils eines der beiden Filter zur Instandsetzung entfernt werden.

In einer derartigen bekannten Einrichtung sind Wartungsarbeiten an den Filtern, wie das Anschwemmen, sehr häufig notwendig, da beide Filter ständig stark beansprucht sind.

Der Erfindung liegt die Aufgabe zugrunde, eine Einrichtung zur mechanischen und ionalen Reinigung einer Flüssigkeit zu entwickeln, deren Filter aufgrund ihrer Anordnung länger aufnahmefähig und besser ausnutzbar sind als bei bekannten Einrichtungen.

Die Aufgabe wird erfindungsgemäß dadurch gelöst, daß zwischen der Zweigableitung eines Filters und der Zweigzuleitung eines anderen Filters eine absperrbare Verbindungsleitung angeordnet ist, wodurch die Filter wahlweise in Parallelschaltung oder in Serienschaltung zu betreiben sind.

Bei geschlossener Verbindungsleitung werden die Filter parallel betrieben. Eine Serienschaltung der Filter ist beispielsweise gegeben, falls die Verbindungsleitung zwischen der Zweigableitung des ersten Filters und der Zweigzuleitung des zweiten Filters geöffnet ist und gleichzeitig die Anschlüsse der Zweigableitung des ersten Filters an die Ableitung und der Zuleitung an die Zweigzuleitung des zweiten Filters abgesperrt sind.

Durch die erfindungsgemäße Serienschaltung von beispielsweise zwei Filtern übernimmt jedes der beiden Filter nur einen Teil der gewünschten Leitfähigkeitsreduzierung. Bei gleich großer Aufnahmekapazität für Ionen sind die hintereinander geschalteten Filter länger einsatzbereit als es gleichartige parallelgeschalte Filter sein können.

Falls beispielsweise die Leitfähigkeit von Primärwasser, die mehr als 0,2 μS/cm betragen kann, auf einen Rein wasserwert von 0,06 μS/cm zu verringern ist, braucht das erste Filter der Serienschaltung die Leitfähigkeit nur ungefähr auf die Hälfte des ursprünglichen Wertes, also auf ca. 0,1 μS/cm zu reduzieren. Die weiter notwendige Verkleinerung der Leitfähigkeit auf 0,06 μS/cm wird im nachgeschalteten zweiten Filter bewirkt.

Durch die geringere Beanspruchung der einzelnen Filter wird der Vorteil erzielt, daß die Filter erheblich länger als bisher einsatzbereit sind. Eine Erneuerung eines Filters ist in der erfindungsgemäßen Einrichtung nur noch in ungefähr doppelt so großen zeitlichen Abständen als bei einer bekannten vergleichbar leistungsfähigen Einrichtung notwendig. Dadurch wird ein guter Wirkungsgrad der Filteranlage erzielt. Da bei der Instandsetzung verbrauchter Filter kontaminierter Abfall anfällt, erreicht man durch die aufgrund der Erfindung verlängerten Filterstandzeit, daß weniger kontaminierte Abfälle als bisher anfallen.

Ergänzend zu der Verbindungsleitung zwischen der Zweigableitung des ersten Filters und der Zweigzuleitung des zweiten Filters ist beispielsweise eine weitere Verbindungsleitung vorhanden, die die Zweigableitung des zweiten Filters mit der Zweigzuleitung des ersten Filters verbindet. Falls diese zweite Verbindungsleitung geöffnet ist und gleichzeitig der Anschluß der Zweigableitung des zweiten Filters an die Ableitung sowie der Anschluß der Zuleitung an die Zweigzuleitung des ersten Filters verschlossen sind, wird die zu reinigende Flüssigkeit in Serienschaltung zunächst durch das zweite Filter und dann durch das erste Filter geführt. Die Durchflußrichtung in den einzelnen Filtern bleibt gleich, unabhängig davon, welches der Filter in der Serienschaltung an erster Stelle steht.

Dadurch, daß die Reihenfolge, in der die in Serie geschalteten Filter durchströmt werden, frei wählbar ist, läßt sich eine ungleiche Belastung der hintereinander geschalteten Filter ausgleichen. Darüber hinaus ist gewährleistet, daß nach dem Auswechseln von nur einem von zwei Filtern das zu reinigende Wasser stets zuerst das verbrauchtere Filter durchströmt. Ist nämlich das aufnahmefähigere Filter nachgeschaltet, dann wird selbst bei einem relativ verbrauchten ersten Filter ein guter Wirkungsgrad erreicht. In der erfindungsgemäßen Einrichtung wird stets nur das hochbelastete Filter ausgewechselt, ohne daß gleichzeitig auch ein Austauschen des zweiten weniger belasteten Filters erfolgen muß. Nach einem Filterwechsel wird die Reihenfolge, in der die Filter durchströmt werden, umgekehrt. Dadurch ist dann wieder das verbrauchtere Filter in Strömungsrichtung vor dem unverbrauchteren Filter geschaltet. Damit wird der Vorteil erzielt, daß die Kapazität der einzelnen Filter voll ausgenützt wird. Mit der erfindungsgemäßen Einrichtung ist es nicht mehr notwendig, gleichzeitig mit einem hochbelasteten Filter auch ein erst gering belastetes Filter auszuwechseln. Dadurch wird die Menge des bei der Filterreinigung anfallenden kontaminierten Abfalles weiter reduziert.

Durch den wahlweisen Parallel- und Serienbetrieb der Filter, wobei im Serienbetrieb die Reihenfolge, in der die Filter durchströmt werden, wählbar ist, wird bei gutem Wirkungsgrad der einzelnen Filter eine lange Einsatzzeit erreicht. Die Ionenaustauscherharze in den Filtern werden gut ausgenutzt. Folglich müssen die Filter nur selten ausgetauscht und gereinigt werden, wodurch bei gleichbleibend guter Wasserqualität wenig kontaminierter Abfall anfällt.

Ergänzend zu den genannten Verbindungsleitungen sind die Zweigzuleitungen der Filter in Strömungsrichtung hinter dort angeordneten Pumpen durch eine dritte absperrbare Verbindungsleitung miteinander verbunden. Dadurch wird der Vorteil erzielt, daß bei Ausfall der Pumpe in einem Zweig, die in der gesamten Einrichtung benötigte Pumpleistung durch eine Pumpe eines anderen Zweiges zu übernehmen ist.

Eine vierte Verbindungsleitung verbindet die Zweigableitungen der Filter, wodurch das abfließende Wasser auf die Zweigableitungen aufteilbar it.

Die erfindungsgemäße Einrichtung ermöglicht bei einfacher und überschaubarer Leitungsführung eine vorteilhafte optimale Ausnutzung der Reinigungsfilter.

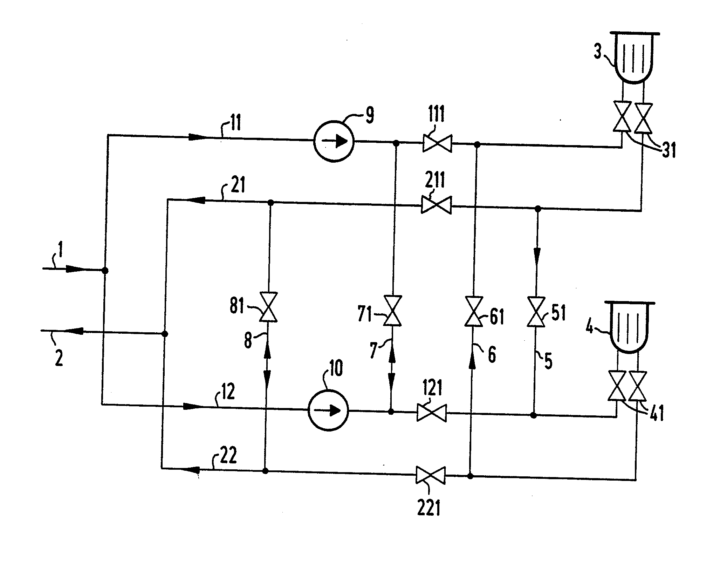

Die Erfindung wird anhand der Zeichnung näher erläutert:

Die Zeichnung zeigt eine Einrichtung zur Reinigung des im Primärkreislauf eines Kernkraftwerkes umlaufenden Wassers.

Das zu reinigende Wasser wird durch eine Zuleitung 1 der Reinigungseinrichtung zugeführt. Eine Ableitung 2 leitet das gereinigte Wasser wieder zurück. Die Reinigungseinrichtung weist zwei Filter 3 und 4 auf. Das erste Filter ist durch eine erste Zweigzuleitung 11 mit der Zuleitung 1 und durch eine erste Zweigableitung 21 mit der Ableitung 2 verbunden. Entsprechend steht das zweite Filter 4 über eine zweite Zweigzuleitung 12 mit der Zuleitung 1 und über eine zweite Zweigableitung 22 mit der Ableitung 2 in Verbindung. Hierdurch ist eine Parallelschaltung der beiden Filter 3 und 4 realisiert. In den Zweigzuleitungen 11 und 12 sind Pumpen 9 und 10 und Absperrventile 111 und 121 angeordnet. In den Zweigableitungen 21 und 22 sind Absperrventile 211 und 221 angeordnet. Weitere Absperrventile 31 und 41 befinden sich in den Anschlußstutzen der Filter 3 und 4.

Erfindungsgemäß ist die Zweigableitung 21 des ersten Filters 3 durch eine absperrbare erste Verbindungsleitung 5 mit der Zweigzuleitung 12 des zweiten Filters 4 verbunden. Falls die Ventile 211 und 121 geschlossen sind und ein Ventil 51 in der ersten Verbindungsleitung 5 geöffnet ist, ist eine Serienschaltung der Filter 3 und 4 gegeben. Die zu reinigende Flüssigkeit gelangt von der Zweigableitung 21 des ersten Filters 3 durch die erste Verbindungsleitung 5 direkt in die Zweigzuleitung 12 des zweiten Filters 4.

Zwischen der Zweigableitung 22 des zweiten Filters 4 und der Zweigzuleitung 11 des ersten Filters 3 ist eine zweite absperrbare Verbindungsleitung 6 angeordnet. Bei geschlossenen Ventilen 221 und 111 sowie bei geöffnetem Ventil 61 in der zweiten Verbindungsleitung 6 wird in Serienschaltung zuerst das zweite Filter 4 und dann das erste Filter 3 durchströmt. Dabei bleibt die Fließrichtung innerhalb der Filter 3 und 4 unverändert. Durch die Wahl der Verbindungsleitungen 5 oder 6 wird nur die Reihenfolge, in der die Filter 3 und 4 durchströmt werden, vertauscht.

Die Zweigzuleitungen 11 und 12 sind in Strömungsrichtung hinter den Pumpen 9 und 10 und vor den Ventilen 111 und 121 miteinander durch eine dritte absperrbare Verbindungsleitung 7 verbunden. Bei geöffnetem Ventil 71 in der dritten Verbindungsleitung 7 kann eine der Pumpen 9 oder 10, die Rückschlagventile enthalten, die gesamte Einrichtung betreiben. Eine vierte durch ein Ventil 81 absperrbare Verbindungsleitung 8 befindet sich in Strömungsrichtung unmittelbar hinter den Ventilen 211 und 221 zwischen den beiden Zweigableitungen 21 und 22. Die abfließende Flüssigkeit ist so auf die beiden Zweigableitungen 21 und 22 aufteilbar.

## Ansprüche

1. Einrichtung zur mechanischen und ionalen Reinigung einer durch eine Zuleitung (1) zugeführten und durch eine Ableitung (2) abgeführten Flüssigkeit, insbesondere von im Primärkreislauf eines Kernkraftwerkes umlaufendem Wasser, durch zwischen absperrbaren Zweigzuleitungen (11 und 12) und Zweigableitungen (21 und 22) parallelgeschaltete Filter (3 und 4), die insbesondere Pulverharz-Anschwemmfilter sind,

**dadurch gekennzeichnet,**
daß zwischen der Zweigableitung (21,22) eines Filters (3,4) und der Zweigzuleitung (12,11) eines anderen Filters (4,3) eine absperrbare Verbindungsleitung (5,6) angeordnet ist, wodurch die Filter (3 und 4) wahlweise in Parallelschaltung oder in Serienschaltung zu betreiben sind.

2. Einrichtung nach Anspruch 1,
**dadurch gekennzeichnet,**
daß zwischen der Zweigableitung (21) eines ersten Filters (3) und der Zweigzuleitung (12) eines zweiten Filters (4) eine erste Verbindungsleitung (5) und zwischen der Zweigableitung (22) des zweiten Filters (4) und der Zweigzuleitung (11) des ersten Filters (3) eine zweite Verbindungsleitung (6) angeordnet sind, wodurch die Reihenfolge, in der die in Serie geschalteten Filter (3 und 4) durchströmt werden, umkehrbar ist.

3. Einrichtung nach Anspruch 1,
**dadurch gekennzeichnet,**
daß in Strömungsrichtung hinter in den Zweigzuleitungen (11 und 12) angeordneten Pumpen (9 und 10) die Zweigzuleitungen (11 und 12) durch eine dritte, absperrbare Verbindungsleitung (7) miteinander verbunden sind.

4. Einrichtung nach Anspruch 1,
**dadurch gekennzeichnet,**
daß die Zweigableitungen (21 und 22) durch eine vierte, absperrbare Verbindungsleitung (8) miteinander verbunden sind.

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-B-1 129 241 (SIEMENS) * Spalte 2, letzter Absatz - Spalte 3, Zeile 66; Figur 1 * | 1 | G 21 C 19/30 |
| Y | US-A-2 854 140 (J. MULLER) * Spalte 4, Zeilen 15-64; Figur 8 * | 1 | |
| A | US-A-2 454 124 (E.T. BIRSCH et al.) * Spalte 3, Zeilen 10-29; Figuren 1,2 * | 1,2 | |

RECHERCHIERTE SACHGEBIETE (Int. Cl.4)

G 21 C 19/00
G 21 C 17/00
B 01 D 35/00

Der vorliegende Recherchenbericht wurde für alle Patentansprüche erstellt.

| Recherchenort | Abschlußdatum der Recherche | Prüfer |
|---|---|---|
| DEN HAAG | 23-10-1987 | JANDL F. |